# EUROPÄISCHE PATENTSCHRIFT

(11) **EP 0 711 322 B1**
(45) Veröffentlichungstag und Bekanntmachung des Hinweises auf die Patenterteilung: **30.07.1997**
(21) Anmeldenummer: 94920938.1
(22) Anmeldetag: 15.06.1994
(51) Int. Cl.: C08J 9/00

(54) **GESCHÄUMTES STÄRKEPOLYMER**
FOAMED STARCH POLYMER
MOUSSE EN POLYMERE D'AMIDON

(30) Priorität: 28.07.1993 CH 2280/93
(43) Veröffentlichungstag der Anmeldung: 15.05.1996
(73) Patentinhaber: BIOTEC BIOLOGISCHE NATURVERPACKUNGEN GMBH, 46446 Emmerich (DE)
(72) Erfinder: TOMKA, Ivan, CH-1722 Bourguillon (CH)
(74) Vertreter: Troesch Scheidegger Werner AG
(86) Internationale Anmeldenummer: EP9401946
(87) Internationale Veröffentlichungsnummer: WO9504104

(56) Entgegenhaltungen:
- EP-A- 0 376 201
- DE-C- 4 008 862
- US-A- 4 377 440
- US-A- 5 208 267

## Beschreibung

Die vorliegende Erfindung betrifft ein Verfahren zum Herstellen eines im wesentlichen biologisch abbaubaren Polymerschaumes, ein Verfahren für die Herstellung einer für die Herstellung des biologisch abbaubaren Polymerschaumes geeigneten Polymermischung, einen biologisch abbaubaren Polymerschaum, sowie Verwendungen des biologisch abbaubaren Polymerschaumes.

Das Herstellen von geschäumten Polymeren ist ein bekannter Vorgang und erfolgt entweder drucklos auf mechanische Art oder mittels Schaumbildnern, oder aber durch plötzliches Entspannen von Gasen, Treibmitteln oder Lösungsmitteln, die bei höheren Temperaturen einen Blähdruck in der plastischen oder flüssigen Polymermasse hervorrufen.

Derartige Polymerschaumstoffe weisen die unterschiedlichsten Anwendungsgebiete auf, wie u.a. im Verpackungswesen, im Wärmeschutz, Schallschutz, in der Bautechnik und in vielen Anwendungsgebieten des täglichen Lebens. Wie generell bei Polymeren oder Kunststoffen, stellt auch bei Schaumstoffen die Entsorgung oder Abbaubarkeit ein wichtiger Faktor dar, insbesondere dann, wenn die Schaumstoffe eine hohe Festigkeit aufweisen und ein Komprimieren nicht ohne weiteres möglich ist.

Aus diesem Grunde sind eine Reihe von Schaumstoffen von sog. biologisch abbaubaren Polymeren bekannt, wie beispielsweise Stärkeschaumstoffe, wobei ausgehend von beispielsweise nativer oder sog. destrukturierter Stärke mittels eines Treibmittels ein derartiger Schaumstoff hergestellt wird. So ist seit nahezu einem Jahrhundert ein Schwamm aus Stärke bekannt, wobei zu seiner Herstellung ein aufgekochter Stärkekleister auf Temperaturen unter dem Gefrierpunkt abgekühlt wird und anschliessend durch Auftauen das Wasser aus der schwammigen Masse entfernt wird.

In der DE 23 04 736 wird ein Verfahren zur Herstellung eines Schaumstoffmaterials beschrieben, bei dem Kohlenhydrate oder Polysaccharide in granulierter gepresster oder grob-kristalliner Form in einem Tunnelofen 10-40 Min. auf 200°-400°C unter Zusatz geringer organischer oder anorganischer Säuren oder saurer Salze trocken erhitzt werden. Infolge auftretender Pyrolyse des Kohlenhydratmaterials tritt Aufblähung ein, wodurch ein karboniertes Schaummaterial erhalten wird.

In der DE 32 06 751 wird ein relativ starrer Schaum durch ein Extrusionsverfahren erhalten, wobei bereits in einem Extruder durch die Schärkräfte und den Druck eine Erwärmung des Stärkematerials eintritt, wobei durch die Gasentwicklung bei der Reaktion von Treibmittelzusätzen eine Aufblähung und Schaumbildung der austretenden gelierenden Stärke unter gleichzeitiger Verfestigung der verkleisterten Stärkemasse einsetzt. Als Treibmittelzusätze werden Kalziumkarbonat und Phosphorsäure beschrieben, wodurch Kohlendioxyd entsteht.

In der W0 91/02023 wird ein Stärkeschaum beschrieben, beinhaltend Stärke und Ethylenacrylsäurecopolymere, der erhalten wird durch Zusetzen eines Treibmittels wie Natriumbikarbonat in Anwesenheit einer Polymersäure. Wiederum ist Kohlendioxyd das Treibgas.

In der W0 91/18048 wird ein Nukleierungsmittel auf Stärkegranalien aufgetragen. Durch Wärme wird das Nukleierungsmittel zersetzt, worauf die Schaumentwicklung einsetzt. Als Nukleierungsmittel kommen Karbonate in Frage, wodurch erneut Kohlendioxyd das verantwortliche Treibgas ist.

Stärkeschaum kann aber auch dadurch hergestellt werden, indem beispielsweise Stärkepulver mit Wasser angemischt wird, diese Masse extrudiert wird und beim Extrudieren die Stärke durch den entstehenden Wasserdampf aufgebläht wird.

Alle die beschriebenen derartigen Stärkeschaumstoffe sind in der Regel teilweise oder vollständig biologisch abbaubar, wobei aber selbstverständlich durch das Zusetzen von synthetischen Additiven bzw. Kunststoffzusätzen die Abbaubarkeit negativ beeinflusst werden kann. Auch hat es sich gezeigt, dass durch Einbringen von Wasser als Treibmittel, oder durch die Verwendung von Kohlendioxyd als Treibgas, ein Aufschäumen der Stärke bewirkt werden kann, sich jedoch eine ungleichmässige Zellstruktur einstellt, was wiederum zusätzliche Additive erfordert. Auch ist der notwendige Treibmittelanteil bzw. das notwendige Wasser zur Erzeugung des entsprechenden Wasserdampfes sehr hoch und beträgt bis zu 20%.

In der US-A-4 377 440 wird die Herstellung eines Zellulosepapiers bzw. eines Kartons beschrieben durch Erzeugen einer wässrigen Zellulosesuspension und das Hinzufügen eines sogenannten Hydrocolloids, um das Wasser wenigstens teilweise in der Suspension zu binden. Diese so hergestellte Mischung Zellulose/Hydrocolloid sowie gebundenes Wasser wird anschliessend unter Beibehaltung des Wassergehaltes bearbeitet bzw. geknetet, um die formbare Papier- oder Kartonmasse herzustellen. Das beispielsweise als Stärke enthaltene Hydrocolloid wird in Gegenwart des sehr hohen Wassergehaltes gelatinisiert bzw. destrukturiert, so dass die erhaltene formbare Paste durch das gebundene Colloid plastisch wird. Schlussendlich wird mittels Spritzguss ein kartonartiges Fasergussprodukt aus der entwässerten, geflockten Kartonpulpe hergestellt.

Die Verwendung von Wasser im Zusammenhang mit Stärke weist Nachteile auf, welche insbesondere im Zusammenhang mit der Entwicklung von sogenannter thermoplastischer Stärke erkennbar sind, welche Nachteile in einer Reihe von Publikationen wie der internationalen Patentanmeldung W0 90/05161 sowie dem Artikel "Sorbtionsverhalten von nativer und thermoplastischer Stärke", R.M. Sala, I.A. Tomka, Die angewandte makromolekulare Chemie 199/1992, 45-63; sowie in der Diss. ETH Nr. 9917 von R.M. Sala, 1992, ETH Zürich, eingehend dargelegt sind.

Als Folge davon wäre es vorteilhaft, thermoplastische Stärke oder Polymerblends, beinhaltend thermoplastische Stärke und beispielsweise Polycaprolacton als Basis für das Herstellen eines Stärkeschaumstoffes zu verwenden. Da in der Stärke eingebundenes Wasser für die Herstellung eines derartigen Schaumes nicht in Frage kommt, sind gängige physikalische oder chemische Treibmittel erfoderlich, die den Vorteil der biologischen Abbaubarkeit reiner thermoplastischer Stärke und deren Blends in Frage stellen, und/oder keine natürlich wachsenden Ressourcen darstellen. Zudem sind eine Reihe natürlich vorkommender Treibmittel mit der thermoplastischen Stärke nicht kompatibel oder thermisch instabil oder erhöhen die thermische Degradation der thermoplastischen Stärke.

Es ist daher eine Aufgabe der vorliegenden Erfindung, einen biologisch abbaubaren Polymerschaum vorzuschlagen, der eine möglichst gleichmässige Zellstruktur mit niedriger Dichte und sehr guten mechanischen Eigenschaften und möglichst hoher Wasserresistenz aufweist. Erfindungsgemäss wird diese Aufgabe mittels eines Verfahrens vorzugsweise nach Anspruch 1 gelöst.

Vorgeschlagen wird ein Verfahren zum Herstellen eines im wesentlichen biologisch abbaubaren Polymerschaumes, wobei von thermoplastischer oder destrukturierter Stärke oder einer Polymermischung, bestehend aus thermoplastischer oder destrukturierter Stärke mit mindestens einem weiteren biologisch abbaubaren hydrophoben Polymeren, ausgegangen wird. Die Stärke oder Stärkemischung wird zunächst mit einem biologisch abbaubaren faserartigen oder kapselartigen Material gemischt, welches die Fähigkeit besitzt, Wasser kapillaraktiv einzubinden, und das wenigstens teilweise mit Wasser versetzt ist oder weitgehendst wollständig gesättigt ist. Das so hergestellte Polymer/Materialgemisch kann entweder isoliert bzw. beispielsweise granuliert werden, um später in einem gesonderten Verfahren schrittweise verarbeitet zu werden, oder aber direkt unter Regelung von Druck und Temperatur derart weiterverarbeitet werden, dass das im Material kapillar gebundene Wasser freigesetzt wird, um ein Aufschäumen des Polymers zu bewirken. Der grosse Vorteil des Einbringens von Wasser als Treibmittel durch die faserartigen oder kapselartigen Materialien besteht darin, dass durch das kapillaraktive Einbinden von Wasser unerwünschte Wechselwirkungen mit der Polymermatrix vermieden werden können. Zudem kann die Gesamtwasser/Treibmittelmenge auf diese Weise sehr gering gehalten werden, und zwar bis zu unter 0,1 Gew.% bezogen auf das Gesamtgewicht der Stärke/Materialmischung.

Um die ausgezeichneten physikalischen bzw. mechanischen Eigenschaften von thermoplastischer Stärke in einem erfindungsgemässen Stärkeschaum zur Geltung zu bringen, wird vorzugsweise von thermoplastischer Stärke oder einer Polymermischung, beinhaltend thermoplastische Stärke, ausgegangen, wobei der Wassergehalt in der thermoplastischen Stärke oder der Polymermischung weniger als 5 Gew.% beträgt, vorzugsweise weniger als 1 Gew.%. Die thermoplastische Stärke oder Polymermischung kann mit bis zu 30 Gew.% an faserartigem oder kapselartigem, mit Wasser versetztem oder gesättigtem Material gemischt werden. Wesentlich beim Mischen des Polymers bzw. der Polymermischung mit dem mit Wasser versetzten Material ist, dass die Prozessparameter wie Druck und Temperatur nicht Werte erreichen, die zur Freisetzung des kapillaraktiv gebundenen Wassers bzw. Treibmittels führen. In der Regel erfolgt deshalb das Mischen der thermoplastischen Stärke bzw. der Polymermischung mit dem mit Wasser versetzten Material, beispielsweise in einem Extruder, in einem Temperaturbereich von ca. 100°-200°C, wobei dieser Temperaturbereich bzw. die optimal zu wählenden Temperaturen vom Plastifizierungs- bzw. Quellmittel in der Stärke und somit von der Schmelzviskosität der Stärke abhängig sind.

Als faserartige oder kapselartige Materialien kommen die nachfolgenden Fasern in Frage: Hanf, Jute, Sisal, Baumwolle, Flachs/Leinen, Maulbeerseide oder Abaca. Als besonders vorteilhaft erweisen sich die sog. Ramiefasern, beispielsweise ebenfalls bekannt als Fasern des sog. Chinagrases.

Die Ramiefaser wird oft auch als die sog. Hochleistungsfaser direkt aus der Natur bezeichnet, da sie eine echte Alternative zu den synthetischen technischen Fasern darstellt. Ramiefasern werden deshalb oft auch als Verstärkungsfasern eingesetzt infolge ihrer hohen Reissfestigkeit, geringen Reissdehnung und auch infolge ihrer hohen Adhäsion. Anwendungen finden sich zum Vertärken von Gummi bändern, als Verstärkungsfaser für Baustoffe wie Zement, Gips, Verstärkungsfaser für duroplastische Polymere wie auch als Verstärkungsfaser für Geotextilien.

Besonders vorteilhaft aber ist, dass Ramiefaser infolge ihres natürlichen Ursprungs vollständig verrottbar bzw. biologisch abbaubar ist.

Als faserartige oder kapselartige Materialien eignen sich aber auch Substanzen wie Blähton, Silikagel, Agarosegel, Cephatexgel und Ceolith.

Die thermoplastische Stärke enthält als Plastifizierungsmittel bzw. Quellmittel vorzugsweise eine der nachfolgenden Substanzen: Glycerin, Sorbitol, Pentaeritritol, Trimethylpropan, Polyvinylalkohol, Aminoalkohol, andere mehrwertige Alkohole, Mischungen dieser Komponenten, ethoxylierte Polyalkohole wie Glycerin und Ethoxylat oder Sorbitol und Ethoxylat. Diese Liste ist nicht abschliessend, und die Verwendung weiterer Plastifizierungs- bzw. Quellmittel ist möglich, welche für die Herstellung von thermoplastischer Stärke geeignet sind, wobei, wie bereits oben ausgeführt, Wasser nicht geeignet ist.

Anstelle von thermoplastischer Stärke kann auch eine Polymermischung verwendet werden. welche unter anderem thermoplastische Stärke beinhaltet und mindestens eine weitere hydrophobe Polymerkomponente wie beispielsweise ein Cellulosederivat mit einem Substitutionsgrad <2 wie Celluloseäther, Celluloseester oder ein -mischester;
ein aliphatischer Polyester wie Polycaprolacton, Polyhydroxy-Buttersäure, Polyhydroxy-Buttersäure/Hydroxy-Valeriansäure-Copolymer oder Poly-Milchsäure;
ein hydrophobes Protein wie Zein und/oder
ein Polyvinylalkohol, hergestellt durch nicht hundertprozentige Hydrolisierung von Polyvinylacetat, vorzugsweise mit einem Hydrolisierungsgrad von ca. 88%.

Als Beispiel für einen Celluloseäther sei Cellulosediethyläther (CDE) genannt, der beispielsweise mit Diethyltartrat als Weichmacher bei ca. 190°C thermoplastisch verarbeitbar ist und welcher Celluloseäther biololgisch abbaubar ist. Die maximale Wasseraufnahme bei 20°C beträgt nur gerade 0,04 Gew.-Anteile.

Als Beispiel für Celluloseester sei Cellulosediacetat (CDA) oder als Mischester Celluloseacetatbutyrat genannt, die mit Weichmachern bei 180°C thermoplastisch verarbeitbar sind und die biologisch abbaubar sind. Die maximale Wasseraufnahme bei 20°C in Wasser beträgt nur gerade 0,05 Gew.-Anteile.

Polycaprolacton kann ohne Weichmacher bei 120°C verarbeitet werden, ist teilkristallin mit einem Schmelzpunkt zwischen 60° und 80°C und einer glasigen Erstarrung bei -50°C. Die mechanischen Eigenschaften sind vergleichbar mit denjenigen von Low Density Polyethylen. Die maximale Wasseraufnahme bei 20°C ist < 0,01 Gew.-Anteile, und zudem ist Polycaprolacton biologisch abbaubar. Ein grosser Vorteil der Verwendung von Polycaprolacton liegt darin, dass es mit thermoplastischer Stärke problemlos mischbar ist, ohne die Notwendigkeit der Verwendung eines sog. Phasenvermittlers.

Polyhydroxy-Buttersäure/Polyhydroxy-Valeriansäure-Copolymere sind thermoplastisch verarbeitbar, weisen gute mechanische Eigenschaften auf sowie niedrige Wasseraufnahme von < 0,01 Gew.-Anteile und sind zudem biologisch abbaubar. Dasselbe trifft für Polymilchsäure zu, die, obwohl thermoplastisch gut verarbeitbar, gute mechanische Eigenschaften aufgweist sowie biologisch abbaubar ist.

Als hydrophobes Protein wird beispielsweise Zein vorgeschlagen, das mit 0,2 Gew.-Anteilen von Laurinsäure oder Diethyltartrat bei 130°C thermoplastisch verarbeitbar ist.

Schliesslich sei noch Polyvinylalkohol genannt, bekannt beispielsweise unter dem Markennamen Noviol, wobei vorteilhafterweise das zur Herstellung verwendete Polyvinylacetat 88%ig hydrolisiert wird.

Da die thermoplastische Stärke hydrophil ist und die oben erwähnten Partner für die Herstellung einer Polymermischung hydrophoben Charakter aufweisen, ist es in der Regel notwendig bzw. vorteilhaft, für deren Herstellung einen sog. Phasenvermittler zu verwenden, der sowohl verträglich ist gegenüber thermoplastischer Stärke und gleichzeitig gegenüber dem hydrophoben Polymeren. Aufgrund der unterschiedlichen Kohäsionsenergiedichten von Stärke und den hydrophoben Polymeren kommen Blockcopolymere in Frage, und zwar solche, die aus einem in Stärke löslichen Block und aus einem in der hydrophoben Polymerphase löslichen Block bestehen. Wesentlich dabei ist natürlich, dass der Phasenvermittler ebenfalls biologisch abbaubar ist und thermoplastisch einwandfrei verarbeitet werden kann. Als Beispiel hierzu sei ein Polycaprolacton/Polyvinylalkoholcopolymer genannt. Als Phasenvermittler kommen aber auch Reaktionsprodukte zwischen einem hydrophoben biologisch abbaubaren Polymeren mit der thermoplastischen Stärke in Frage, die verträglich sind mit der hydrophoben Polymerphase. Dabei kann das biologisch abbaubare Polymere reaktive Gruppen wie beispielsweise Epoxydgruppen oder auch Säureanhydridgruppen umfassen, welche mit mindestens einem Teil der thermoplastischen Stärke reagieren.

Der zu verwendende Phasenvermittler bzw. die einzusetzende Menge ist schliesslich eine Frage der Optimierung. Wesentlich bei der für die Schaumherstellung zu verwendenden Polymermischungen ist, dass sie möglichst homogen bzw. gleichmässig ist, um auch einen möglichst gleichmässigen Schaum herstellen zu können.

Gemäss einer bevorzugten Ausführungsvariante des Verfahrens wird thermoplastische Stärke oder die Polymermischung, beinhaltend thermoplastische Stärke mit einem Wassergehalt von < 1 Gew.% mit 2-20 Gew.%, vorzugsweise ca. 4-8 Gew.%, mit Wasser gesättigter Ramiefaser mit einer Faserlänge von ca. 0,3-4,0 mm in einem Temperaturbereich von ca. 130°-170°C gemischt. Das Mischen kann beispielsweise in einem Einwellen- oder gleich- bzw. gegenläufigen Zweiwellen-Extruder oder einem Kokneter erfolgen oder auch in einer diskontinuierlichen Anlage wie einem Innenmischer oder Stempelkneter. Wichtig bei diesem Mischvorgang ist, dass das in der Ramiefaser kapillaraktiv gebundene Wasser nicht freigesetzt wird. Andererseits sind aber Temperatur und Druck sowie die eingebrachte mechanische Arbeit derart zu dosieren, dass keine Degradation der thermoplastischen Stärke einsetzt. Die Temperatur für die Einarbeitung ist im weiteren abhängig vom in der thermoplastischen Stärke verwendeten Quellmittel bzw. Plastifiziermittel, welches die Schmelzviskosität der Stärke stark beeinflussen kann. So sind beispielsweise bei einer thermoplastischen Stärke, beinhaltend Glycerin, tiefere Temperaturen beim Einarbeiten der Ramiefasern zu wählen als bei thermoplastischer Stärke, beinhaltend beispielsweise Sorbitol.

Nun ist es grundsätzlich möglich, die mit Ramiefaser versetzte thermoplastische Stärke oder den Polymerblend, beinhaltend thermoplastische Stärke, zu isolieren und als sog. Polymerrohstoff für die weitere Herstellung eines Stärkeschaumes in einem separaten Arbeitsgang bzw. zu einem späteren Zeitpunkt zwischenzulagern. Die andere Möglichkeit besteht darin, dass der Stärkecompound direkt weiterverarbeitet wird, beispielsweise durch Einspritzen in eine Spritzgussform, wobei auch der so hergestellte Formling nach wie vor nicht geschäumt sein muss.

Für die Schaumherstellung ist es nun wichtig, dass bei erhöhter Temperatur und erhöhtem Druck, beispielsweise bei 200°-210°C, der Stärkecompound verarbeitet wird, wodurch das in der Ramiefaser kapillaraktive Wasser freigesetzt wird, um die Stärke aufzuschäumen. Dabei ist es möglich, die Stärkeschmelze, beinhaltend die Ramiefasern in einem Extruder bei den erwähnten ca. 200°C zu verarbeiten bzw. zu extrudieren oder spritzzugiessen, wobei beim Verlassen der Düse die thermoplastische Stärke bzw. die Polymermischung aufschäumt. Oder aber der bereits hergestelle Spritzling kann in eine Form eingegeben werden und bei erhöhter Temperatur und erhöhtem Druck aufgeschäumt werden.

Im Gegensatz zu den diversen, aus dem Stand der Technik bekannten Stärkeschäumen weist der erfindungsgemäss hergestellte Schaum, bestehend aus thermoplastischer Stärke, bzw. der Polymermischung, beinhaltend thermoplastische Stärke, eine äusserst gleichmässige Zellstruktur auf, niedrige Dichte und sehr gute mechanische Eigenschaften. Die mechanischen Eigenschaften werden natürlich auch durch das Vorhandensein der Ramiefasern entscheidend mitbeeinflusst, da bekanntlich Ramiefasern dazu geeignet sind, die mechanischen Eigenschaften von Polymeren bzw. Kunststoffen wesentlich zu verbessern.

Bei der Herstellung der zum Schäumen geeigneten biologisch abbaubaren Polymeren wie beispielsweise der thermoplastischen Stärke, ist es selbstverständlich auch möglich und gelegentlich auch von Vorteil, wenn mit Additiven gearbeitet wird, wie beispielsweise mit zusätzlichen Plastifiziermitteln, Gleitmitteln, Weichmachern, usw. Auch kann es von Vorteil sein, wenn das zum Einarbeiten bestimmte Material, welches das Wasser kapillaraktiv gebunden hat, wie beispielsweise die Ramiefasern, vor dem Einarbeiten oberflächenbehandelt wird, wie beispielsweise gummiert bzw. degummiert, um eine bessere Benetzbarkeit durch das Polymer zu ermöglichen. Auch Zusätze wie Antiflammmittel, Farbstoffe, usw. können beim Compoundieren des Polymers bzw. der Polymermischung verwendet werden.

Bei der Herstellung des Polymerschaumes ist aber beim Beifügen von Additiven wie Plastifiziermitteln, Gleitmitteln und insbesondere Weichmachern darauf zu achten, dass die Viskosität nicht zu niedrig ist. Eine niedrige Viskosität wirkt sich negativ auf die Herstellung des Schaumes aus, und bei zu niedriger Viskosität besteht die Gefahr des Kollabierens. Niedrige Viskosität bei dem zu schäumenden Material kann sich aber auch ergeben, wenn die in der Polymermischung nebst der thermoplastischen Stärke verwendete weitere Polymerkomponente eine sehr niedrige Viskosität aufweist, und aufgrund eines zu hohen Anteiles dieser weiteren Komponente die Gesamtviskosität niedrig ist. Generell sollte beim Herstellen eines Polymerblendes für die Verwendung der Herstellung eines erfindungsgemässen Schaumes darauf geachtet werden, dass die Viskosität der darin enthaltenen thermoplastischen Stärke nicht wesentlich herabgesetzt wird. Eine zu niedrige Viskosität ergibt sich aber auch, wenn der Wassergehalt im zu schäumenden Material zu hoch ist. Schliesslich kann zu niedrige Viskosität auch ein Zeichen dafür sein, dass die im zu schäumenden Material verwendete thermoplastische Stärke zu stark abgebaut ist.

Die Eigenschaften des Polymerschaumes können aber auch beispielsweise über die Faserlänge der zu verwendenden Ramiefasern gesteuert werden, oder aber durch Abmischen von verschiedenen Materialien, wie beispielsweise von Ramiefasern mit Baumwollfasern, um beispielsweise eine höhere Flexibilität des Schaumstoffes zu bewirken. Denkbar ist auch ein Mischen von Ramiefasern beispielsweise mit Blähton oder mit Silikagel, usw.

Die vorliegende Erfindung schafft entsprechend einen biologisch abbaubaren Polymerschaum, bestehend im wesentlichen aus geschäumter thermoplastischer Stärke oder einer geschäumten thermoplastischen Polymermischung, welche mit einem Material compoundiert bzw. versetzt ist, das die Fähigkeit besitzt, Wasser kapillaraktiv einzubinden. Bei diesem Material kann es sich entweder um ein faserartiges Material handeln, wie Hanf, Jute, Sisal, Baumwolle, Flachs/Leinen, Maulbeerseide, Abaca oder vorzugsweise um Ramiefasern, oder aber um ein kapselartiges Material, wie beispielsweise Blähton, Silikagel, Agarosegel, Sephatexgel oder Ceolith.

Der erfindungsgemäss definierte Polymerschaum eignet sich u.a. als Verpackungsmittel, als Wärme- oder Schallisolation bzw. generell als Dämmstoff und für verschiedene Anwendungen in der Bautechnik.

Die Erfindung wird nun anschliessend unter Bezug auf Ausführungsbeispiele näher erläutert.

Beispiel 1: Ausgegangen wird von thermoplastischer Stärke, welche durch Aufschliessen von 65% Stärke mit 35% Sorbitol hergestellt worden ist. Gearbeitet wird in einem Compoundiergerät der Marke Theysohn TSK 045 (gleichlaufender Zweiwellenextruder) mit verschiedenen Flüssig/Feststoffdosierungen. Im Extruder wird das nachfolgende Temperaturprofil gewählt:

| Zone 1 | Zone 2 | Zone 3 | Zone 4 | Zone 5 | Zone 6 | Zone 7 | Zone 8 |
|---|---|---|---|---|---|---|---|
| 25°C | 130°C | 150°C | 170°C | 150°C | 140°C | 140°C | 170°C |

In Zone 1 werden 10kg/h thermoplastische Stärkegranulate dosiert und aufgeschmolzen. In Zone 5 werden zusätzlich 1500g/h thermoplastischer Stärke, 840g/h Ramiefasern mit einer Faserlänge von 0,5mm und 200g/h Stearinsäure zugegeben. Die Ramiefaser wurde vor Einmischen durch Auffeuchten vorbehandelt bzw. mit Wasser weitgehendst gesättigt. Anschliessend erfolgt Mischen und der Schmelzaustrag sowie Heissabschlag. Es ist dabei zu achten, dass das Material beim Compoundieren nicht bereits aufschäumt, was durch Temperaturen deutlich unter 200°C erreicht werden kann. Die folgenden Extruderwerte wurden gewählt:
- Drehzahl Extruder:: 200 min⁻¹
- Drehmoment:: 65% des Maximaldrehmoments
- Massedruck (Düse):: 4-8 bar

Alternativ zur in Beispiel 1 verwendeten Prozessführung kann auch von nativer Stärke ausgegangen werden, wobei zunächst durch Zusetzen von Sorbitol die thermoplastische Stärke aufgeschlossen wird. Dabei ist zu beachten, dass allfällig in der nativen Stärke vorhandene Feuchtigkeit durch Anlegen von Vakuum entgast wird. Wesentlich ist ja, dass die thermoplastische Stärke beim Verarbeiten bzw. beim Einarbeiten und Compoundieren mit der Ramiefaser nur geringe Feuchtigkeit aufweist, d.h. vorzugsweise beträgt die Feuchtigkeit 1 Gew.%.

Beispiel 2: Verwendet wird dasselbe Compoundieraggregat wie in Beispiel 1. Wiederum werden 10kg/h thermoplastischer Stärke (beinhaltend 35 Gew.% Sorbitol) in Zone 1 zudosiert und aufgeschmolzen. In Zone 5 werden zusätzlich 1500g/h thermoplastischer Stärke sowie 1200g/h Ramiefasern mit einer Fasernlänge von 0,5 mm sowie 200g/h Stearinsäure zudosiert.

Extruderwerte:
- Drehzahl Extruder:: 200 min⁻¹
- Drehmoment:: 80% des Maximaldrehmoments
- Massedruck (Düse):: 4 bar

### Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 25°C | 130°C | 150°C | 170°C | 130°C | 120°C | 120°C | 160°C |

Beispiel 3: Als Basis in Beispiel 3 dient native Stärke, welche in Zone 1 eines analogen Compoundieraggregates zugemischt wird, wie in den Beispielen 1 und 2 verwendet. In Zone 1 werden 13,5kg/h Stärke zudosiert und in Zone 2 10kg/h Sorbitol. Dann erfolgt der Stärkeaufschluss zu thermoplastischer Stärke. Entstehender Wasserdampf wird in Zone 4 über ein Vakuum abgesaugt. In Zone 5 werden 200g/h fertige thermoplastische Stärke sowie 1200g/h Ramiefasern mit einer Faserlänge von 1 mm sowie 200g/h Stearinsäure zudosiert. Die so hergestellte Schmelze wird ausgetragen und granuliert.

Extruderwerte:
- Drehzahl Extruder:: 200 min⁻¹
- Drehmoment:: 65% des Maximaldrehmoments
- Massedruck (Düse):: 40 bar

### Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 80°C | 160°C | 190°C | 180°C | 160°C | 140°C | 140°C | 170°C |

Wie das Temperaturprofil deutlich zeigt, werden in den Zonen 2 bis 4 Temperaturen zwischen 160°C und 190°C eingestellt, welche Temperaturen notwendig bzw. bevorzugt sind, um thermoplastische Stärke aufzuschliessen. Anschliessend werden die Temperaturen auf 160°C bzw. darunter abgesenkt, um ein Austreten der Feuchtigkeit aus den Ramiefaserkapillaren zu verhindern.

Anstelle von Sorbitol kann selbstverständlich auch Pentaeritritol oder Glycerin verwendet werden oder ein anderer geeigneter Weichmacher zum Aufschliessen der thermoplastischen Stärke. Je nach der sich einstellenden Viskosität der Stärke/Weichmachermischung bzw. der so aufgeschlossenen thermoplastischen Stärke können in den Zonen 4 und folgende für das Einarbeiten der Ramiefasern tiefere Temperaturen gewählt werden.

Beispiel 4: Alle Einstellungen wie in Beispiel 3, nur in Zone 5 werden anstelle von 200g/h Stearinsäure neu 400g/h zudosiert.

Extruderwerte:
- Drehzahl Extruder:: 200 min⁻¹
- Drehmoment:: 60-65% des Maximaldrehmoments
- Massedruck (Düse):: 30-40 bar

Beispiel 5: In Zone 1 werden 13,5kg/h Stärke zudosiert und in Zone 2 10kg/h Sorbitol. Daran anschliessend erfolgt Aufschluss der Stärke. In Zone 4 wird unerwünschtes Wasser entzogen. In Zone 5 werden 200g/h fertig aufgeschlossene thermoplastische Stärke, 240g/h Ramiefasern mit Faserlänge 2 mm und 360g/h von einem neutralen Fettsäureester als Verarbeitungshilfe zudosiert. Die Schmelze wird abgezogen und granuliert.

Extruderwerte:
- Drehzahl Extruder:: 250 min⁻¹
- Drehmoment:: 55% des Maximaldrehmoments
- Massedruck (Düse):: -

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 80°C | 160°C | 190°C | 180°C | 170°C | 160°C | 160°C | 170°C |

Beispiel 6: Gleiche Prozessführung wie in Beispiel 5, nur werden in Zone 5 statt 360g/h neu 470g/h Verarbeitungshilfe zudosiert.

Extruderwerte:
- Drehzahl Extruder:: 250 min⁻¹
- Drehmoment:: geringerer Wert wie Beispiel 5
- Massedruck (Düse):: -

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 80°C | 160°C | 190°C | 180°C | 150°C | 135°C | 135°C | 135°C |

Beispiel 7: In Zone 1 werden 10kg/h fertig aufgeschlossene thermoplastische Stärke eingegeben, sowie in Zone 2 160g/h Wasser als Prozesshilfe. In Zone 4 wird das Wasser wieder entfernt. In Zone 5 erfolgt Zugabe von 2000g/h fertig ausgeschlossener thermoplastischer Stärke, sowie 2400g/h Ramiefasern mit Faserlänge von 2 mm und 360g/h eines neutralen Fettsäureesters als Verarbeitungshilfe. Anschliessend Abzug der Schmelze und Granulieren.

Extruderwerte:
- Drehzahl Extruder:: 200 min⁻¹
- Drehmoment:: 65% des Maximalwertes
- Massedruck (Düse):: -

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 40°C | 130°C | 155°C | 170°C | 150°C | 140°C | 140°C | 170°C |

Beispiel 8: In Zone 1 werden 10kg/h fertig aufgeschlossene thermoplastische Stärke zudosiert sowie in Zone 2 160g/h Wasser als Prozesshilfe. In Zone 4 erfolgt Entfernung des Wassers. In Zone 5 Zugabe von 2000g/h fertig aufgeschlossene thermoplastische Stärke sowie 1200g/h Ramiefasern mit einer Faserlänge von 1 mm und 360g/h eines neutralen Fettsäureesters als Verarbeitungshilfe. Anschliessend Abziehen der Schmelze und Granulieren.

Extruderwerte:
- Drehzahl Extruder:: 200 min⁻¹
- Drehmoment:: 50-55% des Maximalwertes
- Massedruck (Düse):: -

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 25°C | 130°C | 155°C | 170°C | 150°C | 140°C | 140°C | 170°C |

Beispiel 9: Basis: fertig aufgeschlossene thermoplastische Stärke mit 33% Glyzerin; Faserlänge 0,5 mm, Wassergehalt der Faser 7%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 100°C | 180°C | 180°C | 150°C | 120°C | 120°C | 120°C | 170°C |

In Zone 1 werden 15kg/h thermoplastisches Stärke-Granulat dosiert und aufgeschmolzen. In Zone 4 werden zusätzlich 340g/h Ramiefasern, in Zone 5 1500g/h thermoplastische Stärke und 200g/h Stearinsäure zugegeben. Dann erfolgt Schmelzeaustrag und Heissabschlag. Es ist darauf zu achten, dass das Material nicht schon beim Compoundieren aufschäumt (Temp. < 200°C).

Extruderwerte:
- Drehzahl Extruder:: 150 min⁻¹
- Drehmoment:: 45% des Maximaldrehmomentes
- Massedruck (Düse):: 4 bar

Beispiel 10: Fertig aufgeschlossene thermoplastische Stärke mit 33% Glyzerin; Faserlänge 0,5 mm, Wassergehalt der Fasern 7%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 100°C | 180°C | 180°C | 150°C | 120°C | 120°C | 120°C | 170°C |

In Zone 1 werden 20kg/h thermoplastisches Stärke-Granulat dosiert und aufgeschmolzen. In Zone 4 werden zusätzlich 670g/h Ramiefasern, in Zone 5 2500g/h thermoplastische Stärke und 200g/h Stearinsäure zugegeben. Dann erfolgt der Schmelzeaustrag und Heissabschlag. Temperaturen nicht über 200°C.

Extruderwerte:
- Drehzahl Extruder:: 100 min⁻¹
- Drehmoment:: 55% des Maximaldrehmoments
- Massedruck (Düse):: 10 bar

Beispiel 11: Fertig aufgeschlossene thermoplastische Stärke mit 33% Glyzerin; Faserlänge 0,5 mm, Wassergehalt der Fasern 7%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 60°C | 180°C | 180°C | 150°C | 120°C | 120°C | 120°C | 170°C |

In Zone 1 werden 20kg/h thermoplastische Stärke dosiert. In Zone 4 werden 1260g/h Ramiefasern, in Zone 5 3000g/h thermoplastische Stärke und 200g/h Stearinsäure zudosiert. Granulieren.

Extruderwerte:
- Drehzahl Extruder:: 200 min⁻¹
- Drehmoment:: 50% des Maximaldrehmoments
- Massedruck (Düse):: 12 bar

Beispiel 12: Polymerblend, bestehend aus 50% thermoplastischer Stärke (aufgeschlossen mit 35% Sorbitol und Glyzerin im Verhältnis 1:1) und 50% Polycaprolacton; Faserlänge 0,5 mm, Wassergehalt der Fasern 7%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 60°C | 180°C | 180°C | 120°C | 120°C | 120°C | 120°C | 150°C |

In Zone 1 werden 20kg/h der Polymermischung zudosiert. In Zone 4 werden 1260g/h Ramiefasern zugegeben.

Extruderwerte:
- Drehzahl Extruder:: 200 min⁻¹
- Drehmoment:: 50% des Maximaldrehmoments
- Massedruck (Düse):: 4,0 bar

### Beispiel 13: Polymermischung gemäss Beispiel 12.

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 60°C | 180°C | 180°C | 120°C | 120°C | 120°C | 120°C | 150°C |

In Zone 1 werden 20kg/h Polymermischung-Granulat dosiert. In Zone 4 werden 2100g/h Ramiefasern zugegeben. Granulieren.

Extruderwerte:
- Drehzahl Extruder:: 200 min⁻¹
- Drehmoment:: 50% des Maximaldrehmoments
- Massedruck (Düse):: 4,0 bar

Beispiel 14: Im Gegensatz zu den vorab hergestellten Polymermischungen, wo Kartoffelstärke als Stärkebasis diente, wird im vorliegenden Beispiel 14 fertig aufgeschlossene Mais-thermoplastische Stärke mit 35% Sorbitol verwendet. Faserlänge 0,5 mm, Wassergehalt der Fasern 7%.

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 60°C | 160°C | 180°C | 160°C | 160°C | 160°C | 160°C | 170°C |

Dosieren von 15kg/h thermoplastischer Stärke in Zone 1. In Zone 4 werden zusätzlich 900g/h Ramiefasern, in Zone 5 1500g/h fertige thermoplastische Stärke und 400g/h Stearinsäure zugegeben.

Extruderwerte:
- Drehzahl Extruder:: 200 min⁻¹
- Drehmoment:: 45% des Maximaldrehmoments
- Massedruck (Düse):: 6,0 bar

Beispiel 15: Thermoplastische Stärke analog Beispiel 14; Faserlänge 0,1 mm, Wassergehalt der Fasern 7%.

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 60°C | 160°C | 180°C | 160°C | 160°C | 160°C | 160°C | 170°C |

In Zone 1 Dosieren von 15kg/h thermoplastischer Stärke. In Zone 4 zusätzlich 1800g/h Ramiefasern und in Zone 5 1500g/h thermoplastische Stärke und 400g/h Stearinsäure.

Extruderwerte:
- Drehzahl Extruder:: 200 min⁻¹
- Drehmoment:: 45% des Maximalwertes
- Massedruck (Düse):: 10 bar

Beispiel 16: Thermoplastische Stärke analog Beispiele 14 und 15; Faserlänge 1,0 mm, Wassergehalt der Fasern 18%.

Temperaturprofil Extruder:

| Zone 1 | Zone 2 | Zone 3 | Zone 4 | Zone 5 | Zone 6 | Zone 7 | Zone 8 |
|---|---|---|---|---|---|---|---|
| 60°C | 160°C | 180°C | 160°C | 160°C | 160°C | 160°C | 170°C |

In Zone 1 Dosieren von 15kg/h thermoplastischer Stärke. In Zone 4 Zugabe von 1800g/h Ramiefasern, in Zone 5 Zugabe von 3000g/h thermoplastischer Stärke und 400g/h Stearinsäure. Granulieren.

Extruderwerte:
- Drehzahl Extruder:: 200 min⁻¹
- Drehmoment:: 50% des Maximalwertes
- Massedruck (Düse):: 6,0 bar

Beispiel 17: Reines Polycaprolacton; Faserlänge 1,0 mm, Wassergehalt der Fasern 18%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 30°C | 150°C | 150°C | 80°C | 80°C | 80°C | 80°C | 80°C |

In Zone 1 Dosieren von 15kg/h Polycaprolacton. In Zone 2 Zugeben von 1800g/h Ramiefasern, in Zone 5 Zugeben von 5kg/h Polycaprolacton.

Extruderwerte:
- Drehzahl Extruder:: 125 min⁻¹
- Drehmoment:: 45% vom Maximaldrehmoment
- Massedruck (Düse):: 5,0 bar

Beispiel 18: Aufgeschlossene Mais-thermoplastische Stärke mit 32% Sorbitol; Faserlänge 0,5 mm, Wassergehalt der Fasern 18%.

Temperaturprofil Compounder:

| Zone 1 | Zone 2 | Zone 3 | Zone 4 | Zone 5 | Zone 6 | Zone 7 | Zone 8 |
|---|---|---|---|---|---|---|---|
| 60°C | 180°C | 180°C | 180°C | 180°C | 180°C | 200°C | 200°C |

In Zone 1 Dosieren von 25kg/h thermoplastischer Stärke. In Zone 4 Dosieren von 1830g/h Ramiefasern, in Zone 5 Zugabe von 4kg/h thermoplastischer Stärke. In diesem Versuch wurde direkt nach dem Einmischen der Fasern innerhalb des gleichen Prozesses geschäumt.

Extruderwerte:
- Drehzahl Extruder:: 100 min⁻¹
- Drehmoment:: 70-80% des Maximaldrehmoments
- Massedruck (Düse):: 50 bar

Beispiel 19: Die Herstellung erfolgte nun im Gegensatz zu den oben angeführten Beispielen auf einem Buss Ko-Kneter (46 mm Schneckendurchmesser). Als Basis diente Stärke und Weichmacher (35% Sorbitol); Faserlänge 0,5 mm, Wassergehalt der Fasern 7%.

Temperaturprofil im Busskneter:

| Zone 0 | Zone 1 | Zone 2 | Zone 3 | Zone 4 |
|---|---|---|---|---|
| 90°C | 90°C | 130°C | 150°C | 150°C |

Der Busskneter hat 4 Heizzonen (Zonen 1-4), Zone 0 entspricht hier der beheizbaren Schnecke.

Die Stärke wurde hier mit 2,5% Ramiefasern vorgemischt (bezogen auf das Endprodukt TPS = Stärke + Sorbitol). 13,5kg/h Stärke/Fasergemisch und 7kg/h Sorbitol wurden zusammen in Zone 1 zudosiert. Danach erfolgte die Plastifizierung und eine anschliessende Kaltgranulierung.

Kneterwerte:
- Kneterdrehzahl: 200 min⁻¹
die spezifische Leistungsaufnahme beträgt 300 Wh/kg

### Herstellung des Polymerschaumes, beinhaltend Ramiefasern

Beispiel 20 - Schaumversuch 1: Verwendet wird Material aus Beispiel 9.

Das Schäumen wurde auf einem Einschnecken Extruder der Firma Collin (Schneckendurchmesser 45 mm) durchgeführt.
- Temperaturprofil Extruder (°C):: 120/160/200/200/200

Es wurde durch eine angeschraubte Kapillare mit einer Länge von 8 mm und einem Durchmesser von 1,5 mm geschäumt.

Der erreichte Druck betrug bei Höchstdrehzahl (120 min⁻¹) maximal 70 bar.

Die geringste erreichte Dichte betrug 340kg/m³.

### Beispiel 21 - Schaumversuch 2: Material aus Beispiel 16.

Das Schäumen wurde auf einer Arburg-Spritzgiessmaschine (Typ 270 M Schneckendurchmesser 25 mm) durchgeführt.

Hierbei wurde mit einer Umfangsgeschwindigkeit von 30m/min. durch eine Düse mit 1 mm Durchmesser ins Freie ausgespritzt.
- Temperaturprofil (°C):: 120/180/210/210/210
- Erreichte Dichte:: 300kg/m³

### Beispiel 22 - Schaumversuch 3: Material aus Beispiel 19.

Hier wurde auf der obigen Spritzgiessmaschine durch eine 3 mm Düse ins Freie ausgespritzt.
- Temperaturprofil (°C):: 90/140/160/200/200
- Erreichte Dichte:: 160kg/m³

### Beispiel 23 - Schaumversuch 4: Material aus Beispiel 18.

Das Schäumen wurde hier direkt auf dem Theysohn Compounder unmittelbar nach dem Einmischen der Ramiefasern in einem Prozess durchgeführt (Parameter siehe Versuch 18). Die effektive Massetemperatur lag hier bei etwa 200°-210°C. Es wurden Drücke bis zu 50 bar erreicht. Das Schäumen erfolgte durch eine Kapillare mit 3 mm Länge und 3 mm Durchmesser.
- Erreichte Dichte:: 190kg/m³

Das Schäumen mit Ramiefasern wird neben einem geeigneten Material von 2 Parametern massgeblich beeinflusst, nämlich dem Druck und der Temperatur. Zusätzlich spielt noch die Austrittsgeschwindigkeit der Schmelze bzw. des Schaumes eine Rolle. Man kann prinzipiell sagen, dass mit steigendem Druck (bis zu 300-400 bar) und im Fall von Ramiefasern mit tieferer Temperatur der erhaltene Schaum eine immer geringere Dichte aufweist. Die Temperatur nach unten ist allerdings auf ca. 200°C begrenzt, da sonst das Wasser, das in den Ramiefasern gespeichert ist, nicht freigesetzt werden kann. Nach oben sollte die Temperatur von 210°C im Falle der Verwendung von thermoplastischer Stärke nicht überschritten werden, da mit steigender Temperatur eine Degradierung der TPS einsetzen kann, was eine Verschlechterung des Schäumens ergibt. Es ist also auf entsprechende Kühlung des Schaumaggregates zu achten. Die mit den verwendeten Anlagen erreichten Drücke betrugen lediglich bis zu ca. 70 bar (übliche Produktionanlagen arbeiten mit 250-350 bar). Die so mit Ramiefasern hergestellten Schäume wiesen alle eine Dichte im Bereich von 160-340kg/m³ auf, was im Vergleich zur Dichte der Ausgangsmaterialien im Bereich von ca. 1500kg/m³ doch eine respektable Aufschäumung darstellt. Mit optimierten Prozessbedingungen lässt sich hier aber trotzdem noch eine deutliche Reduzierung der Dichte erreichen.

Aus den durchgeführten Schaumversuchen ergab sich im übrigen, dass vorzugsweise mit einer Faserlänge von ca. 0,5-0,6 mm der Ramiefasern gearbeitet wird. Der Anteil an Ramiefasern betrug vorzugsweise von 4-8 Gew.% bezogen auf das Gesamtgewicht des Schaumes, da im Falle von gesättigten Ramiefasern und einem höheren Anteil möglicherweise der so resultierende Wasseranteil im zu schäumenden Material zu hoch wird, wodurch die Viskosität infolge zu hohen Wassergehaltes stark erniedrigt wird. Niedrige Viskosität beim Herstellen des Schaumes ist aber, wie vorab angeführt, nicht erwünscht.

Mit den in den Beispielen 20-23 hergestellten Schaumstoffen wurden im weiteren Stauchversuche durchgeführt. Verwendet wurde ein Zylinder mit 15 mm Höhe. Das darin eingefüllte Schaummaterial wurde 3 mm eingedrückt, während 1 Minute in eingedrücktem Zustand gehalten und anschliessend entlastet, wobei zur Messung der Rückstellung eine weitere Minute gewartet wurde. Im Vergleich dazu wurde eine thermoplastische Stärke, enthaltend 31,5 Gew.% Sorbitol ohne Fasern zu Referenzzwecken verwendet, wobei diese thermoplastische Stärke mit 3,5% Wasser und 0,15 Gew.% Mikrotalkum (als Nukleierungsmittel) aufgeschäumt wurde. Sowohl die vier gemäss den Beispielen 20-23 verwendeten Schaumstoffe wie auch der Referenzschaum wurden bei 70% Luftfeuchte kondizioniert.

Die mit Ramiefasern versetzten Schaumstoffe ergaben ein Rückstellvermögen von 82-91%, wobei das Material gemäss Beispiel 22 ein Rückstellvermögen von 87-91% ergab und der Schaumstoff gemäss Beispiel 23 ein Rückstellvermögen von 88-91%. Demgegenüber stellte sich beim Referenzschaum ohne Ramiefasern ein Rückstellvermögen von 81-89% ein.

Damit zeigt sich, dass die erfindungsgemäss hergestellten Schaumstoffe über eine etwas erhöhte Druckfestigkeit verfügen als der Referenzschaumstoff.

Schliesslich ist noch darauf hinzuweisen, dass die gemäss Beispiele 20-23 hergestellten Schaumstoffe eine höhere Resistenz gegen Luftfeuchte zeigten als der Referenzschaumstoff. Dieser Effekt dürfte insbesondere auf den Anteil an Ramiefasern im Schaumstoff zurückzuführen sein.

Bei den in den Beispielen 1-23 dargelegten Rezepturen und Versuchsbedingungen handelt es sich selbstverständlich nur um Beispiele, die zur näheren Erläuterung der vorliegenden Erfindung dienen. Selbstverständlich ist es möglich, anstelle von reiner thermoplastischer Stärke Polymermischungen zu verwenden, welche thermoplastische Stärke beinhalten. Dabei ist allerdings darauf zu achten, dass die Gesamtviskosität der Mischung nicht wesentlich unter der Viskosität der reinen thermoplastischen Stärke zu liegen kommt. Im weiteren ist es möglich, anstelle von Ramiefasern andere Füllstoffe zu verwenden, welche einerseits biologisch abbaubar sind und anderseits die Fähigkeit besitzen, Wasser kapillaraktiv einzubinden. Erfindungswesentlich ist der Grundgedanke, dass zum Schäumen eines biologisch abbaubaren Polymeres anstelle von Treibmitteln oder freiem Wasser ein ebenfalls biologisch abbaubarer Füllstoff verwendet wird, welcher die Fähigkeit aufweist, Wasser kapillaraktiv einzubinden.

## Patentansprüche

1. Verfahren zum Herstellen eines im wesentlichen biologisch abbaubaren Polymerschaumes, dadurch gekennzeichnet, dass thermoplastische oder destrukturierte Stärke oder eine Polymermischung von thermoplastischer oder destrukturierter Stärke mit mindestens einem biologisch abbaubaren hydrophoben Polymer bei einem Wassergehalt von weniger als 5 Gew.% mit einem biologisch abbaubaren faserartigen oder kapselartigen Material gemischt wird, welches die Fähigkeit besitzt, Wasser kapillaraktiv einzubinden und das wenigstens teilweise mit Wasser versetzt oder gesättigt ist, und daran anschliessend oder in einem gesonderten Verfahrensschritt die Polymer/Materialmischung unter Regelung von Druck und Temperatur derart verarbeitet wird, dass das im Material kapillargebundene Wasser freigesetzt wird, um ein Aufschäumen des Polymers zu bewirken.

2. Verfahren nach Anspruch 1, dadurch gekennzeichnet, dass thermoplastische Stärke oder die Polymermischung, beinhaltend thermoplastische Stärke, mit bis zu 30 Gew.% an faserartigem oder kapselartigem, mit Wasser versetztem oder gesättigtem Material gemischt wird, wobei der Wassergehalt der thermoplastischen Stärke oder der thermoplastischen Stärke/Polymermischung weniger als 5 Gew.%, vorzugsweise weniger als 1 Gew.% beträgt.

3. Verfahren nach einem der Ansprüche 1 oder 2, dadurch gekennzeichnet, dass das Mischen der thermoplastischen Stärke oder der thermoplastischen Stärke/Polymermischung mit dem faserartigen oder kapselartigen Material in einem Temperaturbereich von 100°-200°C, vorzugsweise 130°-170°C erfolgt.

4. Verfahren nach einem der Ansprüche 1-3, dadurch gekennzeichnet, dass das faserartige oder kapselartige Material mindestens eine der nachfolgenden Fasern umfasst:
Hanf, Jute, Sisal, Baumwolle, Flachs/Leinen, Maulbeerseide und/oder Abaca.

5. Verfahren nach einem der Ansprüche 1-3, dadurch gekennzeichnet, dass das faserartige oder kapselartige Material mindestens eine der nachfolgenden Substanzen umfasst:
Blähton, Silikagel, Agarosegel, Cephatexgel und/oder Ceolith.

6. Verfahren nach einem der Ansprüche 1-4, dadurch gekennzeichnet, dass das faserartige oder kapselartige Material Ramiefasern umfasst.

7. Verfahren nach einem der Ansprüche 1-6, dadurch gekennzeichnet, dass die Polymermischung nebst thermoplastischer Stärke mindestens eines der nachfolgenden hydrophoben Polymere enthält:
- Cellulosederivate mit einem Substitutionsgrad ≤ 2, wie Celluloseäther, Celluloseester oder -mischester;
- aliphatische Polyester, wie Caprolacton, Polyhydroxy-Buttersäure, Polyhydroxy-Buttersäure-Hydroxy-Valeriansäure-Copolymere und Poly-Milchsäure;
- hydrophobe Proteine, wie Zein; und/oder
- Polyvinylalkohol, hergestellt durch nicht hunderprozentige Hydrolisierung von Polyvinylacetat, vorzugsweise mit einem Hydrolisierungsgrad von ca. 88%.

8. Verfahren nach Anspruch 7, dadurch gekennzeichnet, dass die Polymermischung einen polymeren Phasenvermittler bzw. ein makromolekulares Dispergiermittel umfasst, wobei der Phasenvermittler bzw. das Dispergiermittel für die molekulare Kopplung der Stärkephase mit der hydrophoben Polymerphase verantwortlich ist.

9. Verfahren nach einem der Ansprüche 1-8, dadurch gekennzeichnet, dass für die Herstellung bzw. das Aufschliessen der thermoplastisch verarbeitbaren Stärke als Quell- oder Plastifizierungsmittel bzw. als Weichmacher mindestens eine der nachfolgenden Substanzen verwendet wird:
- Sorbitol, Glycerin, Pentaeritritol, Trimethylpropan, Polyvinylalkohol, eine Hydroxysäure, wie Milchsäure und/oder deren Salz, Polyvinylalkohol, ein ethoxilierter Polyalkohol, und/oder Mischungen von den obgenannten Substanzen.

10. Verfahren nach einem der Ansprüche 1-9. dadurch gekennzeichnet, dass thermoplastische oder eine thermoplastische Stärke/Polymermischung mit einem Wassergehalt < 1 Gew.% mit 2-20 Gew.% , vorzugsweise 4-8 Gew.%, mit Wasser gesättigten Ramiefasern mit einer Faserlänge von ca. 0,3-4,0 mm, vorzugsweise ca. 0,4-0,6 mm, in einem Temperaturbereich von ca. 120°-180°C, vorzugsweise 130°-170°C, gemischt werden.

11. Verfahren nach einem der Ansprüche 1-10, dadurch gekennzeichnet, dass zur Schaumherstellung die Mischung aus themoplastischer Stärke bzw. der thermoplastischen Stärke/Polymermischung mit der Ramiefaser bei einer Temperatur von ca. 200°-210°C verarbeitet wird, um ein Freisetzen des in der Ramiefaser kapillaraktiv gebundenen Wassers zu bewirken, welches Wasser als Treibmittel dient für das Aufblähen der thermoplastischen Stärke.

12. Verfahren für die Herstellung einer für die Herstellung eines biologisch abbaubaren Polymerschaumes geeigneten Polymermischung, dadurch gekennzeichnet, dass thermoplastische Stärke oder eine Polymermischung beinhaltende thermoplastische Stärke und ein hydrophobes Polymer mit einem Wassergehalt von < 1 Gew.% mit bis zu 30 Gew.%, vorzugsweise ca. 4-8 Gew.%, mit im wesentlichen mit Wasser gesättigten Ramiefasern in einem Temperaturbereich von 130°-170°C gemicht werden.

13. Biologisch abbaubarer Polymerschaum, gekennzeichnet durch geschäumte thermoplastische Stärke oder eine geschäumte Polymermischung, umfassend thermoplastische Stärke und mindestens ein hydrophobes Polymer, welcher Schaum mit Ramiefasern versetzt ist.

14. Polymerschaum nach Anspruch 13, gekennzeichnet durch geschäumte thermoplastische Stärke und mindestens umfassend von 3 bis zu 30 Gew.%, bezogen auf das Gesamtgewicht des Schaumes, an Ramiefasern.

15. Polymerschaum nach einem der Ansprüche 13 oder 14, gekennzeichnet durch geschäumte thermoplastische Stärke, umfassend von 20 bis zu 35 Gew.%, bezogen auf das Gewicht der thermoplastischen Stärke, an Glycerin, Sorbitol oder einem Gemisch davon als Weichmacher, sowie von 4-8 Gew.%, bezogen auf das Gesamtgewicht des Schaumes, an Ramiefasern.

16. Für die Herstellung eines biologisch abbaubaren Polymerschaumes geeignete Polymermischung, dadurch gekennzeichnet, dass thermoplastische Stärke oder eine Polymermischung, beinhaltend thermoplastische Stärke, mit einem Wassergehalt von < 5 Gew.% und mindestens ein hydrophobes Polymer, mit im wesentlichen mit Wasser gesättigten Ramiefasern vorliegt.

17. Polymermischung nach Anspruch 16, dadurch gekennzeichnet, dass thermoplastische Stärke, umfassend von 20 bis zu 35 Gew.%, bezogen auf das Gewicht der thermoplastischen Stärke, an Glycerin, Sorbitol oder einer Mischung davon, gemischt mit im wesentlichen mit Wasser gesättigten Ramiefasern mit einem Ateil von 4 bis zu 8 Gew.%, bezogen auf das Gesamtgewicht der Polymermischung, vorliegt.

18. Verwendung des Polymerschaumes nach einem der Ansprüche 13-15 als Verpackungsmittel, als Wärmeisolation, als Schallisolation, als Dämmstoff, zur Herstellung von Schaumfolien und/oder sog. Chips.

## Claims

1. A process for producing a substantially biodegradable polymer foam, characterised in that thermoplastic or destructured starch or a polymer mixture of thermoplastic or destructured starch with at least one biodegradable hydrophobic polymer at a water content of less than 5% by weight is mixed with a biodegradable fibre-like or capsule-like material which has the ability of binding water in capillary-active manner and which at least partly has water added to it or is saturated with water, and following this or in a separate process step the polymer/material mixture is processed with pressure and temperature being controlled, such that the water which is capillary-bound in the material is released in order to effect foaming of the polymer.

2. A process according to Claim 1, characterised in that thermoplastic starch or the polymer mixture containing thermoplastic starch is mixed with up to 30% by weight fibrous or capsule-like material which has water added to it or is saturated with water, the water content of the thermoplastic starch or of the thermoplastic starch/polymer mixture being less than 5% by weight, preferably less than 1% by weight.

3. A process according to one of Claims 1 or 2, characterised in that the mixing of the thermoplastic starch or of the thermoplastic starch/polymer mixture with the fibre-like or capsule-like material is effected in a temperature range of 100°-200°C, preferably 130°-170°.

4. A process according to one of Claims 1 - 3, characterised in that the fibre-like or capsule-like material comprises at least one of the following fibres:
hemp, jute, sisal, cotton, flax/linen, mulberry silk and/or abaca.

5. A process according to one of Claims 1 - 3, characterised in that the fibre-like or capsule-like material comprises at least one of the following substances:
expanded clay, silica gel, agarose gel, cephatex gel and/or zeolite.

6. A process according to one of Claims 1 - 4, characterised in that the fibre-like or capsule-like material comprises ramie fibres.

7. A process according to one of Claims 1 - 6, characterised in that the polymer mixture in addition to thermoplastic starch contains at least one of the following hydrophobic polymers:
- cellulose derivatives having a degree of substitution ≤ 2, such as cellulose ethers, cellulose esters or cellulose mixed esters;
- aliphatic polyesters, such as caprolactone, polyhydroxybutyric acid, polyhydroxybutyric acid/hydroxyvaleric acid copolymers and polylactic acid;
- hydrophobic proteins, such as zein; and/or
- polyvinyl alcohol, produced by non-one-hundred-percent hydrolysation of polyvinyl acetate, preferably having a degree of hydrolysation of approximately 88%.

8. A process according to Claim 7, characterised in that the polymer mixture comprises a polymeric phase promoter or a macromolecular dispersing agent, the phase promoter or the dispersing agent being responsible for the molecular coupling of the starch phase to the hydrophobic polymer phase.

9. A process according to one of Claims 1 - 8, characterised in that for the production or the breakdown of the thermoplastically processable starch at least one of the following substances is used as swelling agent or plasticiser or as softener:
- sorbitol, glycerol, pentaerythritol, trimethylpropane, polyvinyl alcohol, a hydroxy acid, such as lactic acid and/or the salt thereof, polyvinyl alcohol, an ethoxylated polyalcohol, and/or mixtures of the above substances.

10. A process according to one of Claims 1 - 9, characterised in that thermoplastic [starch] or a thermoplastic starch/polymer mixture having a water content of < 1% by weight is mixed with 2 - 20% by weight, preferably 4 - 8% by weight, ramie fibres saturated with water and having a fibre length of approximately 0.3 - 4.0 mm, preferably approximately 0.4 - 0.6 mm, in a temperature range of approximately 120°-180°C, preferably 130°-170°C.

11. A process according to one of Claims 1 - 10, characterised in that for foam production the mixture of thermoplastic starch or the thermoplastic starch/ polymer mixture is processed with the ramie fibres at a temperature of approximately 200°-210°C in order to effect release of the water bound in capillary-active manner in the ramie fibres, which water serves as a blowing agent for expanding the thermoplastic starch.

12. A process for the production of a polymer mixture suitable for the production of a biodegradable polymer foam, characterised in that thermoplastic starch or thermoplastic starch containing a polymer mixture and a hydrophobic polymer having a water content of < 1% by weight are mixed with up to 30% by weight, preferably approximately 4 - 8% by weight, ramie fibres substantially saturated with water in a temperature range of 130°-170°C.

13. A biodegradable polymer foam, characterised by foamed thermoplastic starch or a foamed polymer mixture, comprising thermoplastic starch and at least one hydrophobic polymer, to which foam ramie fibres are added.

14. A polymer foam according to Claim 13, characterised by foamed thermoplastic starch and at least comprising from 3 to 30% by weight ramie fibres, relative to the total weight of the foam.

15. A polymer foam according to one of Claims 13 or 14, characterised by foamed thermoplastic starch, comprising from 20 to 35% by weight, relative to the weight of the thermoplastic starch, of glycerol, sorbitol or a mixture thereof as softener, and of 4 - 8% by weight ramie fibres, relative to the total weight of the foam.

16. A polymer mixture suitable for the production of a biodegradable polymer foam, characterised in that thermoplastic starch or a polymer mixture, containing thermoplastic starch having a water content of < 5% by weight, and at least one hydrophobic polymer, having ramie fibres substantially saturated with water is present.

17. A polymer mixture according to Claim 16, characterised in that thermoplastic starch, comprising from 20 to 35% by weight, relative to the weight of the thermoplastic starch, of glycerol, sorbitol or a mixture thereof, mixed with ramie fibres substantially saturated with water, having a content of 4 - 8% by weight relative to the total weight of the polymer mixture, is present.

18. The use of the polymer foam according to one of Claims 13-15 as a packing container, as heat insulation, as sound insulation, as an insulating material, for the production of expanded films and/or so-called chips.

## Revendications

1. Procédé de fabrication d'une mousse de polymère essentiellement biologiquement dégradable, caractérisé par le fait que de l'amidon thermoplastique ou déstructuré ou un mélange polymère d'amidon thermoplastique ou déstructuré avec au moins un polymère hydrophobe biologiquement dégradable, à une teneur en eau de moins de 5% en poids, est mélangé avec une matière de type fibres ou de type capsules, biologiquement dégradable, qui possède la capacité de lier l'eau par capillarité et qui est au moins partiellement additionnée d'eau ou saturée avec de l'eau, et à la suite de quoi ou dans une étape de procédé séparée, le mélange polymère/matière est traité avec réglage de la pression et de la température de telle sorte que l'eau liée par capillarité dans la matière soit libérée pour effectuer un moussage du polymère.

2. Procédé selon la revendication 1, caractérisé par le fait que de l'amidon thermoplastique ou le mélange polymère contenant de l'amidon thermoplastique est mélangé avec jusqu'à 30% en poids en matière de type fibres ou de type capsules, additionnée d'eau ou saturée avec de l'eau, la teneur en eau de l'amidon thermoplastique ou du mélange amidon thermoplastique/polymère étant inférieure à 5% en poids, de préférence inférieure à 1% en poids.

3. Procédé selon l'une des revendications 1 et 2, caractérisé par le fait que le mélange de l'amidon thermoplastique ou du mélange amidon thermoplastique/polymère avec la matière de type fibres ou de type capsules a lieu dans une plage de température de 100°-200°C, de préférence 130°-170°C.

4. Procédé selon l'une des revendications 1 à 3, caractérisé par le fait que la matière de type fibres ou de type capsules comprend au moins l'une des fibres suivantes : chanvre, jute, fibre de sisal, coton, lin/toile de lin, soie naturelle et/ou abaca.

5. Procédé selon l'une des revendications 1 à 3, caractérisé par le fait que la matière de type fibres ou de type capsules comprend au moins l'une des substances suivantes : argile expansée, gel de silice, gel d'agarose, gel de Sephadex et/ou zéolithe.

6. Procédé selon l'une des revendications 1 à 4, caractérisé par le fait que la matière de type fibres ou capsules comprend des fibres de ramie.

7. Procédé selon l'une des revendications 1 à 6, caractérisé par le fait que le mélange polymère contient, outre l'amidon thermoplastique, au moins l'un des polymères hydrophobes suivants :
- les dérivés de cellulose ayant un degré de substitution ≤ 2, comme les éthers de cellulose, les esters ou esters mixtes de cellulose ;
- les polyesters aliphatiques, comme la caprolactone, le poly(acide hydroxybutyrique), les copolymères poly(acide hydroxy butyrique-acide hydroxyvalérianique) et le poly(acide lactique).
- les protéines hydrophobes, comme la zéine ; et/ou
- l'alcool polyvinylique, obtenu par hydrolyse non intégrale du poly(acétate de vinyle), de préférence avec un degré d'hydrolyse d'environ 88%.

8. Procédé selon la revendication 7, caractérisé par le fait que le mélange polymère comprend un intermédiaire de phases polymère ou un agent dispersant macromoléculaire, l'intermédiaire de phases ou l'agent dispersant étant responsable du couplage moléculaire de la phase amidon avec la phase polymère hydrophobe.

9. Procédé selon l'une des revendications 1 à 8, caractérisé par le fait que, pour la fabrication ou l'attaque de l'amidon thermoplastiquement transformable, on utilise comme agent gonflant ou de ramollissement ou comme plastifiant au moins l'une des substances suivantes :
- le sorbitol, le glycérol, le pentaérythritol, le triméthylpropane, l'alcool polyvinylique, un hydroxyacide, comme l'acide lactique et/ou ses sels, l'alcool polyvinylique, un polyol éthoxylé et/ou des mélanges des substances mentionnées ci-dessus.

10. Procédé selon l'une des revendications 1 à 9, caractérisé par le fait que de l'amidon thermoplastique ou un mélange amidon thermoplastique/polymère avec une teneur en eau <1% en poids est mélangé avec 2-20% en poids, de préférence 4-8% en poids, de fibres de ramie saturées d'eau ayant une longueur de fibre d'environ 0,3-4,0 mm, de préférence d'environ 0,4-0,6 mm, dans une plage de température d'environ 120°-180°C, de préférence 130-170°C.

11. Procédé selon l'une des revendications 1 à 10, caractérisé par le fait que, pour la fabrication de la mousse, le mélange d'amidon thermoplastique ou du mélange amidon thermoplastique/polymère avec les fibres de ramie est traité à une température d'environ 200-210°C, pour effectuer une libération de l'eau liée par capillarité dans les fibres de ramie, laquelle eau sert d'agent moussant pour le moussage de l'amidon thermoplastique.

12. Procédé de fabrication d'un mélange polymère approprié pour la fabrication d'une mousse de polymère biologiquement dégradable, caractérisé par le fait que de l'amidon thermoplastique ou un mélange polymère contenant de l'amidon thermoplastique et un polymère hydrophobe avec une teneur en eau < 1% en poids est mélangé avec jusqu'à 30% en poids, de préférence environ 4-8% en poids, de fibres de ramie sensiblement saturées d'eau dans une plage de température de 130° - 170°C.

13. Mousse de polymère biologiquement dégradable, caractérisée par de l'amidon thermoplastique moussé ou un mélange polymère moussé, comprenant de l'amidon thermoplastique et au moins un polymère hydrophobe, laquelle mousse est mélangé avec des fibres de ramie.

14. Mousse de polymère selon la revendication 13, caractérisée par de l'amidon thermoplastique moussé et comprenant au moins de 3 jusqu'à 30% en poids, par rapport au poids total de la mousse, de fibres de ramie.

15. Mousse de polymère selon l'une des revendications 13 et 14, caractérisée par de l'amidon thermoplastique moussé, comprenant de 20 jusqu'à 35% en poids, par rapport au poids de l'amidon thermoplastique, de glycérol, de sorbitol ou d'un mélange de ceux-ci comme agent de ramollissement, ainsi que de 4 à 8% en poids, par rapport au poids total de la mousse, de fibres de ramie.

16. Mélange polymère approprié pour la fabrication d'une mousse de polymère biologiquement dégradable, caractérisé par le fait que de l'amidon thermoplastique ou un mélange polymère, contenant de l'amidon thermoplastique avec une teneur en eau < 5% en poids et au moins un polymère hydrophobe, est mélangé avec des fibres de ramie sensiblement saturées d'eau.

17. Mélange polymère selon la revendication 16, caractérisé par le fait que de l'amidon thermoplastique, comprenant de 20 jusqu'à 35% en poids, par rapport au poids de l'amidon thermoplastique, de glycérol, de sorbitol, ou d'un mélange de ceux-ci, est mélangé avec des fibres de ramie sensiblement saturées d'eau en une quantité de 4 à 8% en poids, par rapport au poids total du mélange polymère.

18. Utilisation de la mousse de polymère telle que définie à l'une des revendications 13 à 15, comme agent d'emballage, comme isolation thermique, comme isolation acoustique, comme amortisseur, pour la fabrication de feuilles de mousse et/ou de produits dits copeaux (chips).
